(19) Europäisches Patentamt
European Patent Office
Office européen des brevets

(11) Publication number: **0 310 666 A1**

(12) # EUROPEAN PATENT APPLICATION

published in accordance with Art. 158(3) EPC

(21) Application number: **87902744.9**

(51) Int. Cl.$^3$: **E 02 B 3/14**

(22) Date of filing: **21.04.87**

Data of the international application taken as a basis:

(86) International application number:
**PCT/JP87/00255**

(87) International publication number:
**WO88/08469 (03.11.88 88/24)**

(43) Date of publication of application:
**12.04.89 Bulletin 89/15**

(84) Designated Contracting States:
**AT BE CH DE FR GB IT LI LU NL SE**

(71) Applicant: **IWASA, Nobuhiko**
**26-15, Zempukuji 1-chome Suginami-ku**
**Tokyo 167(JP)**

(72) Inventor: **IWASA, Nobuhiko**
**26-15, Zempukuji 1-chome Suginami-ku**
**Tokyo 167(JP)**

(74) Representative: **Bardehle, Heinz, Dipl.-Ing.**
**Patent- und Rechtsanwälte**
**Bardehle-Pagenberg-Dost-Altenburg-Frohwitter und Partner Galileiplatz 1 Postfach 86 06 20**
**D-8000 München 86(DE)**

(54) **WAVE DISSIPATING CAISSON AND PRODUCING METHOD THEREOF.**

(57) This invention relates to a wave-dissipating caisson comprising a box-shaped skeleton made up merely of ridge members, wherein two pieces of winged bodies, each of which has two trapezoidal wing pieces with bases thereof being separated from each other with top sides thereof being joined to each other, are turned around the axis thereof so as to form an angle of 90 degrees relative to each other and each base of said trapezoidal wing pieces are secured to the columns or crosspieces of the skeleton.

FIG.1

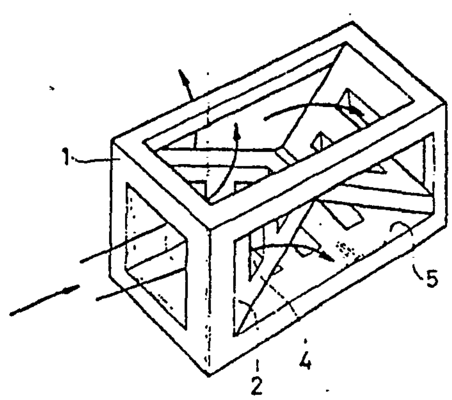


EP 0 310 666 A1

Croydon Printing Company Ltd.

0310666

# SPECIFICATION

## TITLE OF THE INVENTION

# WAVE DISSIPATING CAISSON AND PRODUCING METHOD THEREOF

## BACKGROUND OF THE INVENTION

### FIELD OF THE INVENTION

This invention relates to a permeable wave dissipating caisson to disperse the energy of waves and producing method of said permeable wave dissipating caisson.

### BRIEF DESCRIPTION OF THE PRIOR ART

To break waves to make a connecting facility or for houses along the shore, the construction of a breakwater is popular for a long time.

However, if the wave height is higher than that in designing on a certain case, a flooding may be occured naturally.

Apart from the breakwater, a fender may be considered for the wave dissipation and be founded actually at the beach. There are various kinds of constructions for wave dissipation, which is constructed along the shore and smaller constructions or simple blocks for wave dissipation may be piled up or put them side by side properly in a job site.

On the contrary, if new repair or improving construction is

conducted in harbors, fishing ports, seashore, rivers, seaside road, fihsing blocks, the construction scale of the wave dispertion is large sized and the permanent (not temporary) durability is expected.

Some constructions can meet these requirement a little and insufficiently. For example, when the wave dissipating caisson which is 3 X 3 X 4.5m and 5 X 5 X 7.5m or more in size is constructed to a specified place, the stability should become important more and more in view of the size and weight.

In this scale of the caissons, the producing method is as follows. The base portion is premoulded and concrete is deposited onto the upper portion of it, but each portion cannot have consistency in construction completely.

## SUMMARY OF THE INVENTION

A wave dissipating caisson comprising edge pieces structuring a rectangular parallelepipied skelton and two sets of wing bodies having two pieces of trapezoidal or triangular wing with extending base, in which each wing are joined at the top portion, are connected each other with 90 degrees shift at said top portions in the proceeding direction of the wave in said skelton while a base portion of said wing bodies fitting to crosspieces or pillars consisting said edge pieces.

## BRIEF DESCRIPTION OF THE ACCOMPANYING DRAWINGS

Now the present invention will be described in more detail with reference to the accompanying drawings which illustrate the preferred embodiments of the invention, in which:

Fig. 1 is a perspective view of the wave dissipating caisson which is an embodiment of the basic concept of the present invention;

Fig. 2 is a perspective view of a internal structure in the wave dissipating caisson shown in Fig. 1;

Fig. 3 illustrates a plane view of the wave dissipating caisson according to the invention;

Fig. 4 is a sectional view taken along line B-B in Fig. 3;

Fig. 5 is a sectional view taken along line C-C in Fig. 3;

Fig. 6 is a front view of the wave dissipating caisson shown in Fig. 3;

Fig. 7 is a left side view of the wave dissipating caisson shown in Fig. 6;

Fig. 8 is a right side view of the wave dissipating caisson shown in Fig. 6;

Fig. 9 illustrates a sectional view between a gravel mound and the wave dissipating caisson when an experimental test is conducted;

Fig. 10 illustrates a diagram showing a transmission rate;

Fig. 11 illustrates a diagram showing the reflection rate;

Fig. 12 illustrates a diagram which shows the reflection rate of 0.2 - 0.4 in distribution;

Fig. 13 illustrates a diagram which shows the wave height transmission rate of 0.2 - 0.4 in distribution described in Fig. 12.

## DETAILED DESCRIPTION OF THE PREFERRED EMBODIMENTS OF THE INVENTION

**PREFERRED EMBODIMENTS**

Prefered embodiments of the present invention will be explained with reference to the drawings. Fig. 1 illustrates a perspective view of a wave dissipating caisson which is an embodiment of the basic concept of the present invention.

In Fig. 1, two set of wing bodies 3 comprising two pieces of trapezoidal or triangular wing pieces with each wing joining at the top portion, are connected each other with 90 degrees shift and they are formed as an internal structure. Said internal structure is built in a rectangular parallelepiped skelton 1 in which a bottom plate 5 is remained.

On the other hand, each opened of said wing body 3 is fixed to edge piece of said rectangular parallelpiped skelton. Said bottom plate 5 of the rectangular parallelepiped skelton 1 has a number of holes. In case of Fig. 1, said holes are square. A round, triangular or trapezoidal holes may be provided. Furthermore an appropriate holes are arranged in said trapezoidal or triangular wing pieces. Further explanation will be made hereinafter according to the drawings of Fig. 3 to Fig. 9.

The drawings in Fig. 3 to Fig. 8 illustrate the embodiment of the wave dissipating caisson which is moulded in accordance with the invention, Fig. 3 shows the plane view of the embodiment. In the rectangular parallelepiped skelton 1, a side face has projections 8 and another side face has dents 9. These portions have an function of location to prevent caissons from

slippage when a pluarity of caissons are connected.

Fig. 4 illustrates the sectional view taken along line B B in Fig. 3. Fig. 5 illustrates the sectional view taken along line C-C in Fig. 3. An opening is not provided symmetrically as shown in both drawings. Fig. 6 illustrates the front view of the wave dissipating caisson shown in Fig. 3. Fig. 7 illustrates the left side view of the wave dissipating caisson shown in Fig. 6. Fig. 8 illustrates the right side view of the wave dissipating caisson shown in Fig. 6.

The wave dissipating caisson of the present invention has a construction described hereinbefore. Therefore, a wave which has entered into from the direction of an arrow in Fig. 1, can go into upper and lower direction in the wing body 3 in the front and right and left direction through each hole 4 in the trapezoidal or triangular wing pieces 2.

The wave passed through the front side of the wing body 3 also disperses the flow to upper, lower, right and left in the following rear wing body 3 similarly. Consequently the wave becomes turburant flow and is disappeared in said skelton.

If the wave generated in the offshore is transmitted and surged upon the coast or the shore constructions, the wave dissipating caisson of the present invention can be dispersed the wave to upper, lower, right and left direction from the opening and energy of the wave will be dispersed.

We explain that the wave dissipating caisson is used for a breakwater or a shore protection. To check the wave reflection, various experimental tests are conducted varing a water depth, a

wave height and a wave cycle and the calculation is performed by the following formula using Healey Method.

$$HR = \frac{HR}{H1} = \frac{Hmax - Hmin}{Hmax + Hmin}$$

Where H1 means the height of a incidence wave and HR means the height of a reflection wave.

We found that in case of breakwater application, HR is lowered to 0.2-0.4 (This means that the reflection wave height is 20-40 % of the incidence wave height.) and HR is also lowered to 0.35-0.5 for the shore protection application.

It is confirmed that the wave transmission rate in the rear of the caisson which is calculated by the following formula becomes a value within 0.1 to 0.3. This shows that if the wave height of 1 m is entered the caisson, the wave height of 10-30 cm is flown out.

$$KT = \frac{HT}{H1}$$

Where HT means the transmission wave height.

PREFERRED THE WAVE DISSIPATING CAISSON

In the experimental tests, a model of 12.0 X 12.0 X 18.0 cm in size is used as shown in Fig. 3 to Fig. 8. The model is made of aluminum alloy and the specific gravity is 2.48, the volume is 1449 $cm^3$, the weight in air is 3.61 kg, the weight in water is 2.15 kg. The model is placed in the experimental two dimensional wave generating waterway to conduct the test. The various testing conditions are as follows.

| EXPERIMENTAL TEST | CORRESPONDING ACTUAL SIZE |
|---|---|
| Water Depth | |
| 6.00 cm | 1.50 m |
| 3.00 | 0.75 |
| 0.00 | 0.00 |
| Wave Cycle (second) | |
| 0.80 | 4.00 |
| 1.20 | 6.00 |
| 1.60 | 8.00 |
| 1.90 | 9.50 |
| Wave Height | |
| 1.95 cm | 0.50 m |
| 1.94 | 4.90 |

Water Depth: the height from the upper end of the caisson to water line, hc

By changing various factors, the experimental tests was conducted to measure the reflection rate as shown hereinbefore and a data in Fig. 10 is attached.

In this case, the incidence height is converted to an offshore wave height HO by using a shallow water coefficient KS and the relationship between the relative water depth hc/HO and the reflection rate KR is calculated with the parameter of an offshore wave inclination HO/LO.

By using the same experimental device, an experimental test

result on the wave transmission rate was obtained as shown in Fig. 11.

On the other hand, piling of the wave dissipating caissons of the present invention as an offshore breakwater is examined with various values and the following table is obtained as a result. The caisson is mounted on a gravel in the inclination of 1:2 and the experimental test is conducted for two pieces and three pieces piling.

| Piling | Wave Height(m) | Cycle(second) | Water Depth(m) |
|---|---|---|---|
| 2 pieces | 0.36 - 2.23 | 4.10 - 9.60 | 6.25 |
| | 0.47 - 2.37 | 4.80 - 9.70 | 7.25 |
| | 0.33 - 2.98 | 4.70 - 9.60 | 8.25 |
| 3 pieces | 0.94 - 2.97 | 4.60 - 9.70 | 8.25 |
| | 0.95 - 3.81 | 4.70 - 9.60 | 9.25 |
| | 0.96 - 2.93 | 4.70 - 9.70 | 10.25 |

The water depth is the distance from the upper side of the caisson.

To obtain KP value of the Hudson Formula from measured results for various conditions, an observed results are shown in Fig. 12 and Fig. 13. Fig. 10 and Fig. 11 ilustrate in the type of one-line at the top row for the offshore breakwater. Similar results are obtained for the type of two lines at the top row (so three-lines at the bottom for two stage model and four lines at the bottom for three stage model) and the type of simple piling (same row from bottom to top).

PREFERRED A METHOD OF PRODUCING OF WAVE DISSIPATING CAISSON

Producing method of the wave dissipating caisson in an actual size is explained as follows;

1. Construction of wire rods for reinforcement.

Prior to the construction, a bottom plate portion is formed with reinforced wire rods. Assemble wire rods for reinforcement to form a pillar portion, an upper edgepiece portion, a wing piece portion on the bottom plate protion in order.

2. Conduct a concrete depositing to the base plate portion.

3. After 20 to 24 hours from the concrete depositing, remove a moulding box of the bottom plate portion.

4. Assemble a moulding flame for a lower wing piece portion and place it to the bottom plate portion in position.

5. Assemble a moulding frame for a right side, a left side, a front side and a rear side portion.

6. Assemble a moulding frame for the upper portion.

7. Conduct the concrete depositing for the assemble moulding box. In this case, Ock=210 $Kg/cm^2$, slump=8-12 cm a crude bone material dimension=25 mm Max. are desirable.

8. Use a vibrator to prevent the deposited concrete from bubbles or lumps and leave it.

9. After 48 to 96 hours from the concrete depositing, remove the moulding box.

The wave dissipating caisson can be moulded in accordance with the procedure hereinbefore.

## ADVANTAGES OF THE INVENTION

When piling up or lining up the caissons of the present invention, these caissons harmonize the space of the nature with a visual shape. This caisson is formed by a premounlding frame and it makes easy to make the moulding.

Moreover, the caisson has a struclure in which the seawater can be permeable with openings and it makes the secondary effect as a fishing block when it is placed under the seawater.

The present invention is intended to provide the following caisson.

1. The caisson may not be turned round by wave energy.

2. The caisson is more stable than conventional one in installation with holes in the bottom plate portion.

3. The caisson has an effect of a fishing rock remarkably.

4. The caisson can be produced less concrete consumption and cost reduction because of a lot of openings arrangement.

* * * * *

WHAT IS CLAIMED IS:

1. In a method of producing a wave dissipating caisson;

mouldign a bottom plate portion having a notch area which is made of reinforced concrete by concrete depositing;

installing wire steel rods onto upper portion of said bottom plate portion to be formed to the shape of a pillar portion, an upper crosspiece portion, a wing piece portion;

forming a wing frame, a right and left side frame, a front frame, a rear frame and an upper frame;

conducting concrete depositing;

removing said frames.

2. A wave dissipating caisson comprising:

edge pieces structuring a rectangular parallelepipied skelton 1;

two sets of wing bodies 3 having two pieces of trapezoidal or triangular wing 2 with extending base, in which each wing are joined at the top portion, are connected each other with 90 degrees shift at said top portions in the proceeding direction of the wave in said skelton;

a base portion of said wing bodies fitting to crosspieces or pillars consisting said edge pieces.

3. A wave dissipating caisson according to claim 2, wherein said two pieces of wing 2 are arranged each other with the top of said wings standing close by.

4. A wave dissipating caisson according to claim 2, wherein said two pieces of wing 2 are arranged each other with the top of said wings being in the direction of the wave reflection.

5. A wave dissipating caisson according to claim 2, wherein said two pieces of wing 2 are arranged each other with the top of said wings being in the same direction.

6. A wave dissipating caisson comprising:

edge pieces with a bottom portion 5 structuring a rectangular parallelepiped skelton 1;

wing body 3 being formed with two pieces of trapezoidal or triangular wing 2, in which the top portion of said wing 2 is joined each other;

two sets of said body 3 connecting each other with 90 degrees shift at the top portion which is built in said skelton 1;

the bottom base of said wings 2 connecting to each crosspieces of said skelton 1, while said wing 2 and said bottom base portion 5 providing proper holes.

* * * * *

1/6

0310666

FIG.1

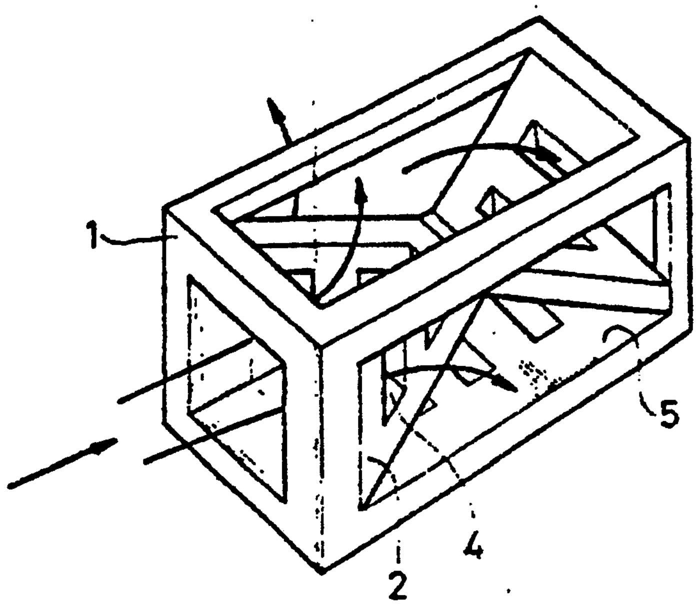


FIG.2

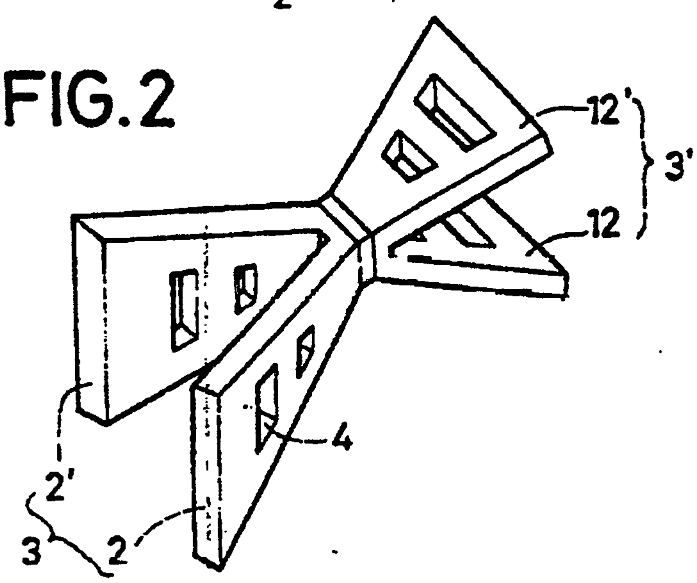

0310666

FIG.3

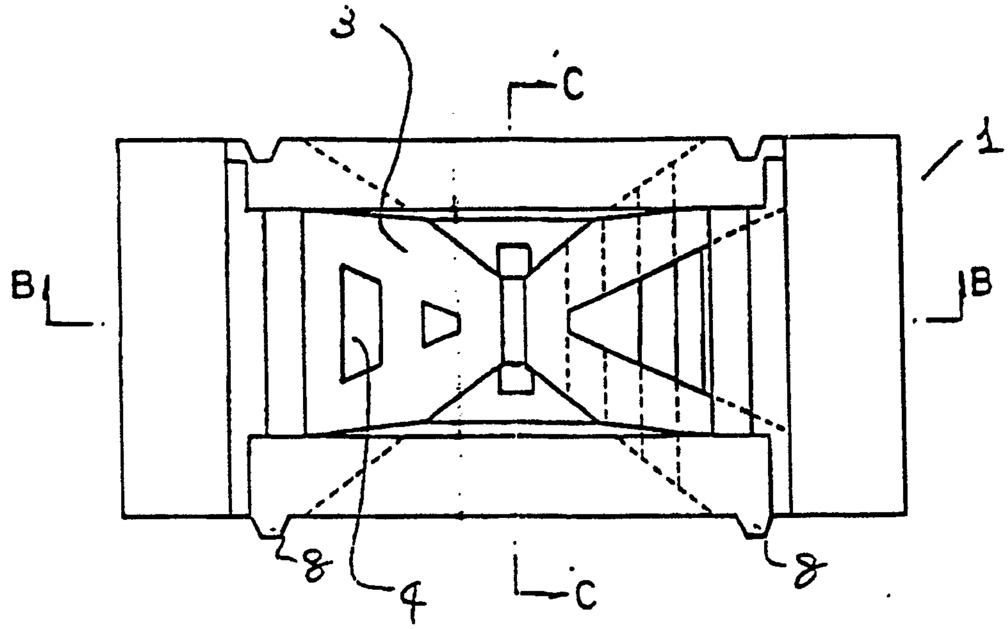


FIG.4

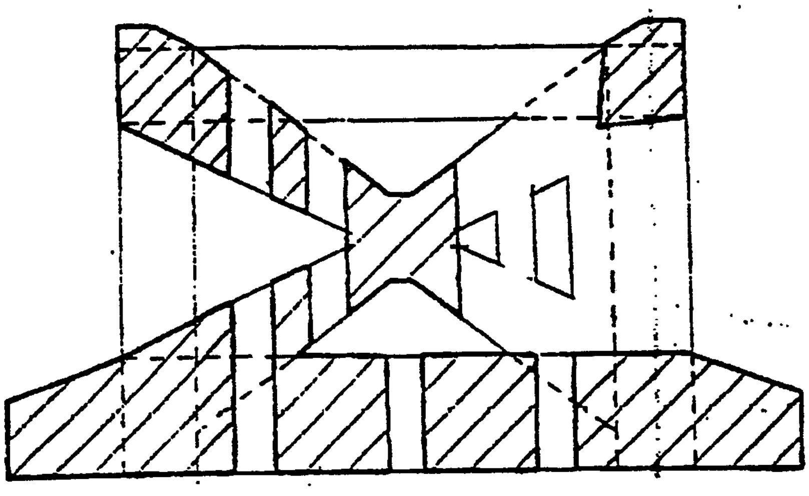

FIG.5

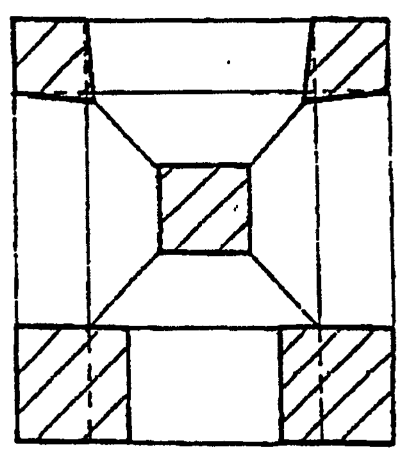

FIG. 6

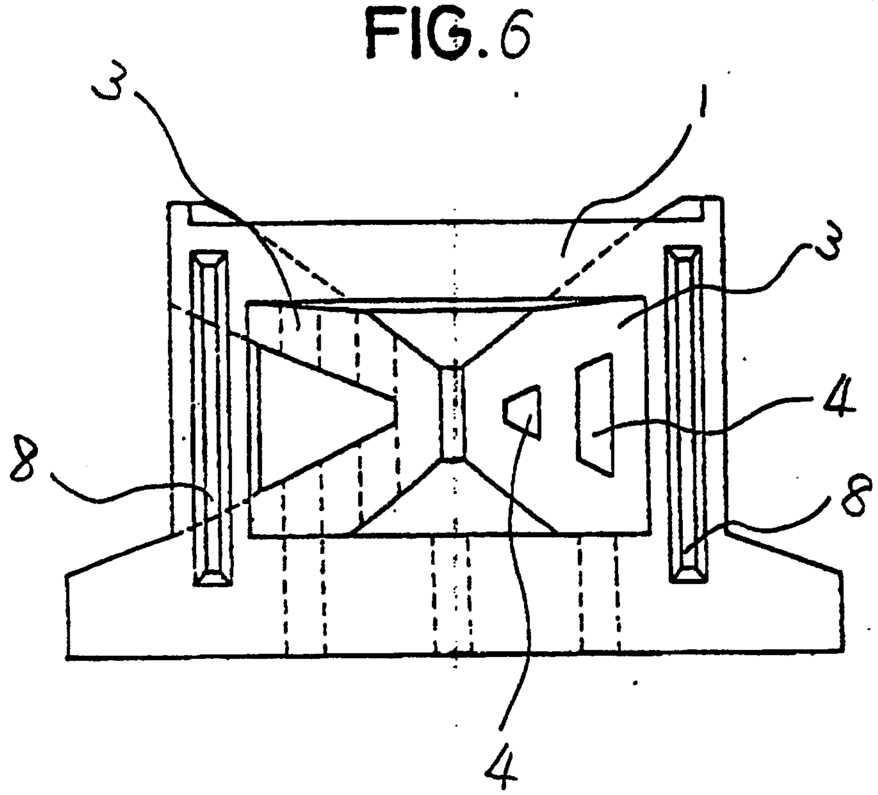


FIG. 7

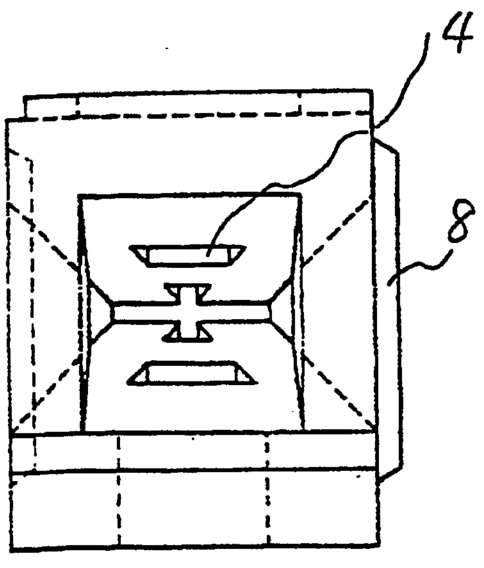


FIG. 8

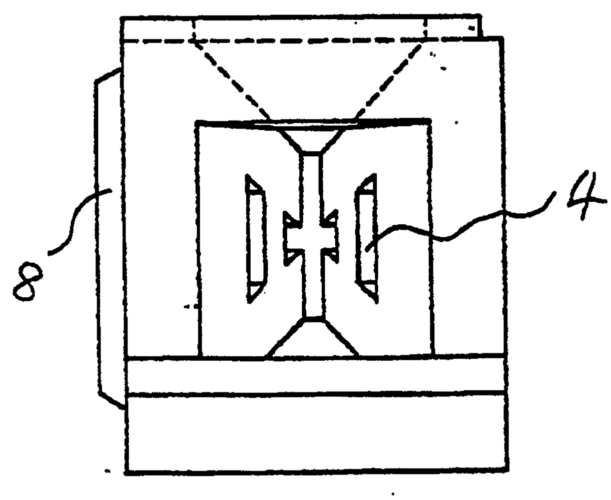

FIG. 9

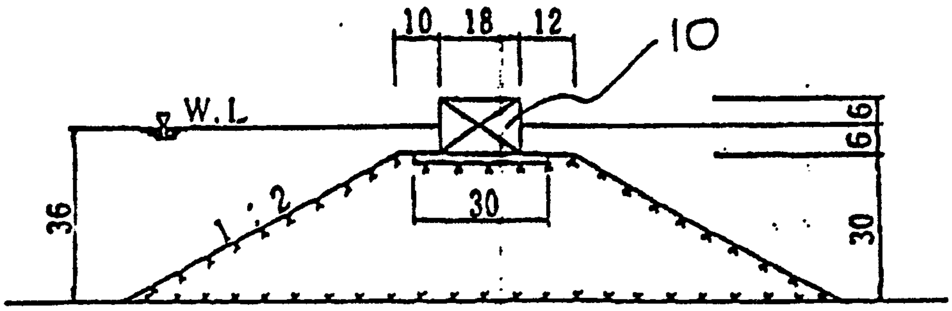

FIG. 10

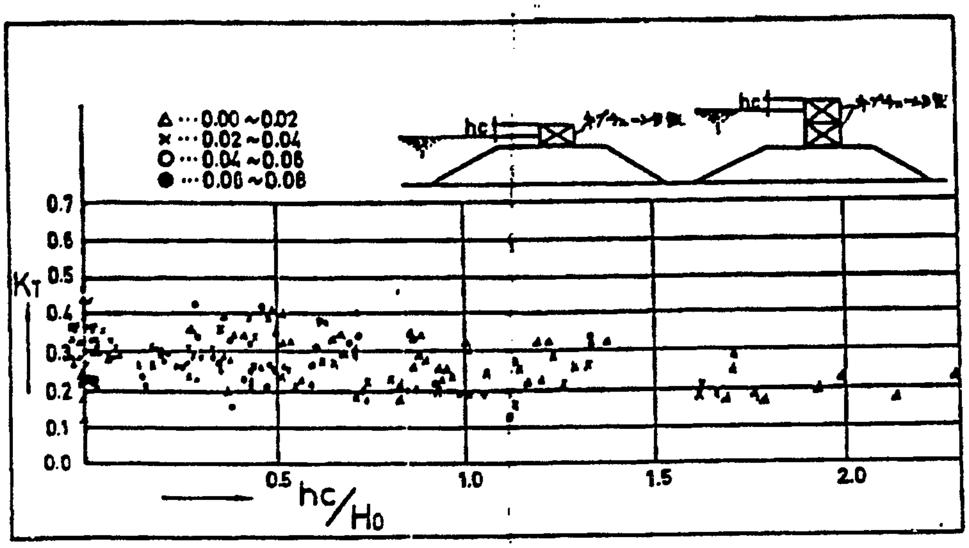
△ ··· 0.00 ~ 0.02
× ··· 0.02 ~ 0.04
○ ··· 0.04 ~ 0.06
● ··· 0.06 ~ 0.08
hc
$K_T$
0.0
0.1
0.2
0.3
0.4
0.5
0.6
0.7
0.5
1.0
1.5
2.0
$hc/H_0$

FIG. 11

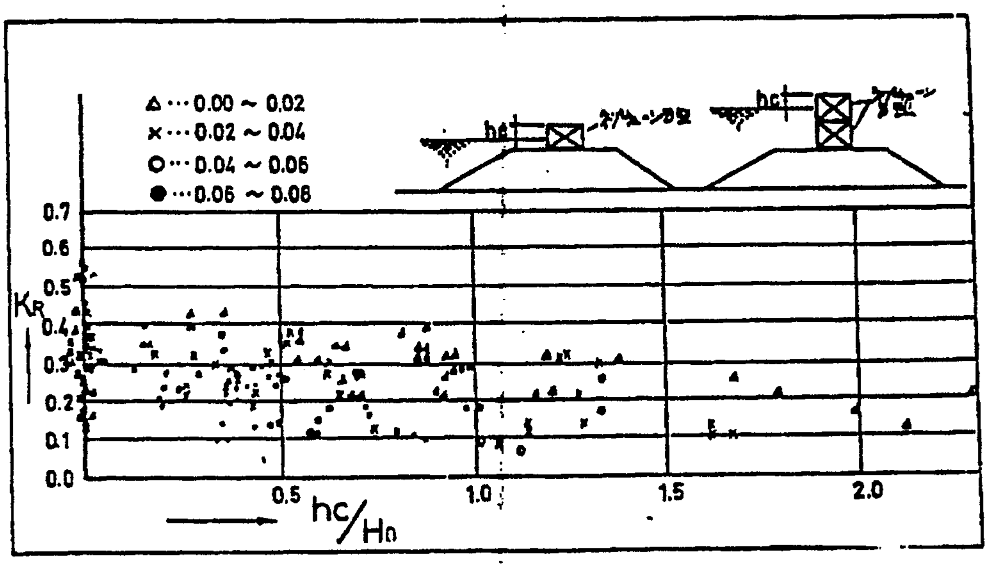
△ ··· 0.00 ~ 0.02
× ··· 0.02 ~ 0.04
○ ··· 0.04 ~ 0.06
● ··· 0.06 ~ 0.08
hc
$K_R$
0.0
0.1
0.2
0.3
0.4
0.5
0.6
0.7
0.5
1.0
1.5
2.0
$hc/H_0$

0310666

FIG. 12

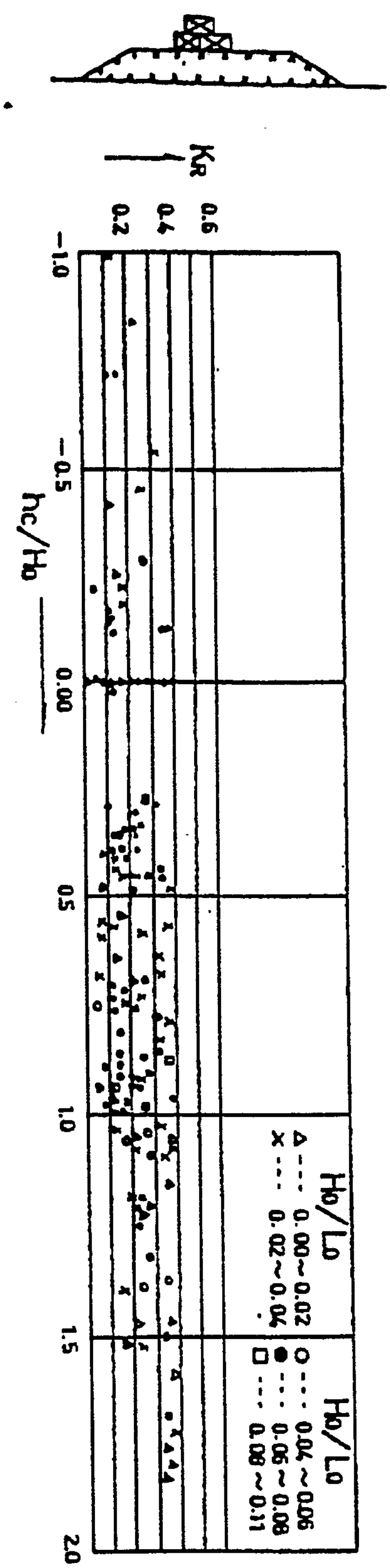


FIG. 13

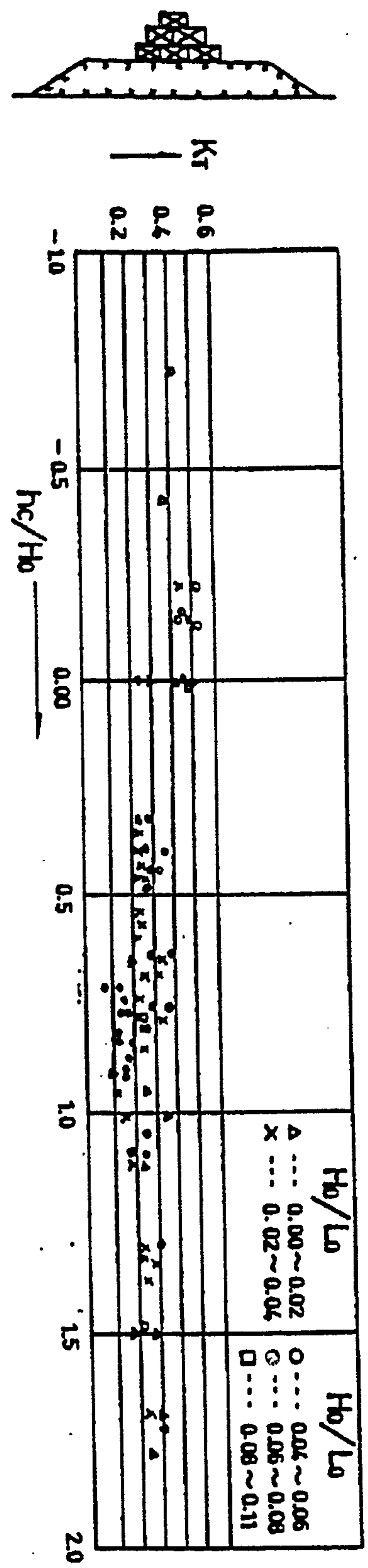

# INTERNATIONAL SEARCH REPORT

0310666

International Application No PCT/JP87/00255

**I. CLASSIFICATION OF SUBJECT MATTER** (if several classification symbols apply, indicate all) [3]

According to International Patent Classification (IPC) or to both National Classification and IPC

Int.Cl[4] E02B3/14

**II. FIELDS SEARCHED**

Minimum Documentation Searched [4]

| Classification System | Classification Symbols |
|---|---|
| IPC | E02B3/00-3/14 |

Documentation Searched other than Minimum Documentation to the Extent that such Documents are Included in the Fields Searched [5]

Jitsuyo Shinan Koho 1926 - 1987
Kokai Jitsuyo Shinan Koho 1971 - 1987

**III. DOCUMENTS CONSIDERED TO BE RELEVANT** [14]

| Category * | Citation of Document, [16] with indication, where appropriate, of the relevant passages [17] | Relevant to Claim No. [18] |
|---|---|---|
| X | JP, B2, 55-10726 (Yada Shoji) 18 March 1980 (18. 03. 80) (Family: none) | 2-5 |
| X | JP, U, 56-163123 (Iwasa Nobuhiko) 4 December 1981 (04. 12. 81) (Family: none) | 6 |
| E | JP, A, 62-94607 (Iwasa Nobuhiko) 1 May 1987 (01. 05. 87) (Family: none) | 1-6 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search [2] | Date of Mailing of this International Search Report [2] |
|---|---|
| July 13, 1987 (13. 07. 87) | July 27, 1987 (27. 07. 87) |
| International Searching Authority [1] | Signature of Authorized Officer [20] |
| Japanese Patent Office | |